# EUROPÄISCHE PATENTANMELDUNG

(11) **EP 2 741 413 A2**
(43) Veröffentlichungstag der Anmeldung: **11.06.2014**
(21) Anmeldenummer: 13005434.9
(22) Anmeldetag: 19.11.2013
(51) Int. Cl.: H02P 3/12

(54) **Hand-Werkzeugmaschine mit einer elektrischen Bremseinrichtung**

(30) Priorität: 08.12.2012 DE 102012024033
(71) Anmelder: Festool Group GmbH & Co. KG, 73240 Wendlingen am Neckar (DE)
(72) Erfinder: Urbanec, Jiri, CZ-40724 Valkerice (CZ)
(74) Vertreter: Bregenzer, Michael

(57) **Zusammenfassung**

Die Erfindung betrifft eine Hand-Werkzeugmaschine (10), insbesondere eine Säge, mit einer durch einen elektrischen Reihenschlussmotor antreibbaren Werkzeugaufnahme (12) für ein Werkzeug (13), insbesondere ein Sägeblatt, wobei der Reihenschlussmotor (11) eine Rotorspulenanordnung (23) und eine Statorspulenanordnung (22) aufweist, die bei einem Arbeitsbetrieb des Reihenschlussmotors (11) von einem durch eine elektrische Antriebsstromschalteranordnung (18) schaltbaren, von einer Stromquelle (20) bereitgestellten Antriebsstrom (IA) durchflossen werden, wobei die Hand-Werkzeugmaschine (10) zum Abbremsen des Reihenschlussmotors (11) eine elektrische Bremseinrichtung (33; 133) aufweist, die eine Bremsstromschalteranordnung (38) zum Schalten eines Rotor-Bremsstromkreises (40) für einen Rotor-Bremsstrom (IR) umfasst, der die Rotorspulenanordnung (23) im Sinne eines Abbremsens durchfließt. Es ist vorgesehen, dass die Bremsstromschalteranordnung (38) den Rotor-Bremsstromkreis (40) durch Kurzschließen der Rotorspulenanordnung (23) bildet und mindestens eine Statorspule (24, 25) der Statorspulenanordnung (22) anhand eines Statorstromschalters (43) der Bremsstromschalteranordnung (38) mit der Stromquelle (20) zu einem Stator-Bremsstromkreis (54; 154) verbunden ist, so dass ein die mindestens eine Statorspule (24, 25) durchfließender Stator-Bremsstrom (IS) durch die Stromquelle (20) bereitgestellt wird und die mindestens eine Statorspule (24, 25) anhand des Stator-Bremsstroms (IS) ein Magnetfeld zum Abbremsen des Rotors (26) erzeugt.

## Beschreibung

Die Erfindung betrifft eine Hand-Werkzeugmaschine, insbesondere Säge, mit einer durch einen elektrischen Reihenschlussmotor antreibbaren Werkzeugaufnahme für ein Werkzeug, insbesondere ein Sägeblatt, wobei der Reihenschlussmotor eine Rotorspulenanordnung und eine Statorspulenanordnung aufweist, die bei einem Arbeitsbetrieb des Reihenschlussmotors von einem durch eine elektrische Antriebsstromschalteranordnung schaltbaren, von einer Stromquelle bereitgestellten Antriebsstrom durchflossen werden, wobei die Hand-Werkzeugmaschine zum Abbremsen des Reihenschlussmotors eine elektrische Bremseinrichtung aufweist, die eine Bremsstromschalteranordnung zum Schalten eines Rotor-Bremsstromkreises für einen Rotor-Bremsstrom umfasst, der die Rotorspulenanordnung im Sinne eines Abbremsens durchfließt.

In der DE 26 24 236A1 ist ein Reihenschlussmotor beschrieben, bei dem über eine Bremsstromschalteranordnung ein Rotor-Bremsstromkreis geschlossen werden kann derart, dass über den Rotor sowie eine Statorspule ein Bremsstrom fließt, wobei der Bremsstrom die Rotorspulenanordnung und die Statorspulenanordnung gegensinnig durchströmt und somit ein Abbremsen des Reihenschlussmotors bewirkt. Die Bremsstromschalteranordnung ist jedoch aufwändig, das heißt es sind mehrere elektrische Schalter notwendig, was die Konstruktion teurer macht und auch das Risiko erhöht, dass ein Schalter defekt ist oder nicht einwandfrei schaltet.

Es ist daher die Aufgabe der vorliegenden Erfindung, eine Hand-Werkzeugmaschine beziehungsweise eine Schaltung für eine Hand-Werkzeugmaschine mit einer verbesserten Bremsung des Reihenschlussmotors bereitzustellen.

Zur Lösung der Aufgabe ist bei einer Hand-Werkzeugmaschine der eingangs genannten Art vorgesehen, dass die Bremsstromschalteranordnung den Rotor-Bremsstromkreis durch Kurzschließen der Rotorspulenanordnung bildet und mindestens eine Statorspule der Statorspulenanordnung anhand eines Statorstromschalters der Bremsstromschalteranordnung mit der Stromquelle zu einem Stator-Bremsstromkreis verbunden ist, so dass ein die mindestens eine Statorspule durchfließender Stator-Bremsstrom durch die Stromquelle bereitgestellt wird und die mindestens eine Statorspule anhand des Stator-Bremsstroms ein Magnetfeld zum Abbremsen des Rotors erzeugt.

Es ist ein Grundgedanke der vorliegenden Erfindung, dass die Statorspulen zur Erzeugung der Bremswirkung durch Bestromung mit dem Stator-Bremsstrom einen Beitrag leisten, wobei durch die Statorspulenanordnung weiterhin ein Erregerstrom fließt, während bereits der Rotor-Bremsstromkreis kurzgeschlossen ist. Zum Rotor-Bremsstromkreis ist noch zu bemerken, dass dieser zwar durch die Bremsstromschalteranordnung zu einem unmittelbaren Kurzschluss der Rotorspulenanordnung schaltbar sein kann, d.h. dass in dem Rotor-Bremsstromkreis abgesehen von einem Schaltelement der Bremsstromschalteranordnung bzw. elektrischen Leitungen keinerlei Widerstand oder sonstige, den Rotor-Bremsstrom reduzierende Einrichtung geschaltet ist. Es ist aber auch möglich, dass der Rotor-Bremsstrom über eine Stromreduzierungseinrichtung, beispielsweise über einen oder mehrere Widerstände, über eine Diode, einen Stromgenerator oder eine Stromquelle oder auch eine sonstige, den Rotor-Bremsstrom reduzierende Einrichtung fließt.

Die Erfindung ermöglicht es, dass beispielsweise auch bei hohen Leistungen und/oder niedrigen Spannungen ein kontrolliertes und optimales Abbremsen des Reihenschlussmotors möglich ist. In einem solchen Fall könnte beispielsweise der Restmagnetismus im Erregerfeld bzw. bei den Statorspulen nicht ausreichen, um den kurzgeschlossenen Rotor abzubremsen. Beispielsweise kann die erfindungsgemäße Hand-Werkzeugmaschine ohne weiteres auch in einem Spannungsbereich von 80-150 V, vorzugsweise 120 V betrieben werden. Selbstverständlich sind auch höhere Spannungsbereiche möglich, beispielsweise 230 V Wechselspannung. Hier ergibt sich dann der Vorteil einer sehr hohen Bremsleistung.

Eine bevorzugte Ausführungsform sieht vor, dass in dem während des Abbremsens des Reihenschlussmotors aktiven Statorstromkreis, sozusagen einem Stator-Bremsstromkreis, mindestens eine Diodeneinrichtung geschaltet ist derart, dass der Stator-Bremsstrom nur in einer Stromrichtung durch die mindestens eine Statorspule strömt, wobei diese Stromrichtung gegensinnig zu Stromrichtung des Rotor-Bremsstroms ist. Dies ist so zu verstehen, dass die beiden Ströme, der Stator-Bremsstrom und der Rotor-Bremsstrom jeweils dazu dienen, dass die mindestens eine Statorspule und die zugeordnete Rotorspule ein gegensinniges Magnetfeld zu erzeugen, das das Abbremsen ermöglicht. An sich stellt beispielsweise die Stromquelle eine Wechselspannung bereit, welche durch die Diodeneinrichtung gleichgerichtet wird, so dass beispielsweise eine pulsierende Gleichspannung vorliegt. Es ist zum Beispiel möglich, dass eine positive oder eine negative Spannung an der mindestens einen Statorspule, vorzugsweise insgesamt an den Statorspulen anliegt, was den entsprechenden Stromfluss in der einen oder der anderen Richtung durch die Statorspule oder Statorspulen hindurch bewirkt.

An dieser Stelle sei bemerkt, dass selbstverständlich eine größere Bremswirkung erreichbar ist, wenn sämtliche oder mehrere Statorspulen der Statorspulenanordnung vom Stator-Bremsstrom durchflossen sind. Es genügt aber, dass eine Statorspule im Sinne eines Abbremsens vom Stator-Bremsstrom durchflossen ist.

Die Diodeneinrichtung wird zweckmäßigerweise durch den Statorstromschalter gebildet oder bildet eine Komponente des Statorstromschalters. Beispielsweise ist der Statorstromschalter so ausgestaltet, dass er nur in einer Richtung Strom führt, wenn er eingeschaltet ist. Eine bevorzugte Ausführungsform des Statorstromschalters sieht beispielsweise ein Triac oder einen Feldeffekt-Transistor vor.

Zweckmäßigerweise ist eine in den Stator-Bremsstromkreis schaltbare oder in dem Stator-Bremsstromkreis angeordnete Stator-Stromeinstelleinrichtung zur Reduzierung oder Einstellung des Stator-Bremsstroms vorhanden. Somit ist es also beispielsweise möglich, den Stator-Bremsstrom ganz gezielt einzustellen oder auch zu reduzieren.

Die Größe des Statorstroms, der während des Abbremsens fließt, ist proportional zum Magnetfeld des Stators, das in Wechselwirkung mit dem Magnetfeld des Rotors steht, der abzubremsen ist.

Die Stator-Stromeinstelleinrichtung umfasst zweckmäßigerweise den Statorstromschalter oder ist durch diesen gebildet. Vorteilhaft ist es, wenn der Statorstromschalter eine Komponente der Stator-Stromeinstelleinrichtung bildet. Auf diesem Wege ist es beispielsweise möglich, dass mit ein und demselben Statorstromschalter, der beispielsweise ein Triac umfasst, nicht nur der Statorstrom eingeschaltet, sondern auch in seiner Größe beeinflusst werden kann. Beispielsweise leistet die Stator-Stromeinstelleinrichtung eine Phasenanschnittsteuerung. Eine bevorzugte Ausführungsform der Erfindung sieht vor, dass zusätzlich zu der Stator-Stromeinstelleinrichtung bzw. dem Statorstromschalter desselben noch ein Widerstand vorhanden ist, der in Reihe mit dem Statorstromschalter geschaltet ist. Wenn der Statorstromschalter ausfällt, wirkt dann immer noch der wi-derstand strombegrenzend.

Zwar sieht eine Ausführungsform der Erfindung vor, dass der Rotor-Bremsstrom quasi ungebremst fließt, das heißt dass die Rotorspulen kurz geschlossen sind. Es ist aber auch möglich, dass eine in den Rotor Bremsstromkreis schaltbare oder dort dauerhaft angeordnete Stromreduzierungseinrichtung zur Reduzierung oder Einstellung des Rotor-Bremsstroms vorhanden ist. Beispielsweise ist es möglich, den durch den Rotor bzw. die Rotorspulenanordnung fließenden Rotor-Bremsstrom durch einen Rotor-Bremsstromschalter zu steuern, beispielsweise mittels eines Triacs. Die Stromreduzierungseinrichtung kann aber auch einen Widerstand umfassen.

Der Statorstromschalter ist zweckmäßigerweise mit der Statorspulenanordnung parallel zu einem die Rotorspulenanordnung sowie ein Antriebsstromschaltelement der Antriebsstromschalteranordnung umfassenden Strompfad angeordnet. Die Antriebsstromschalteranordnung bzw. das Antriebsstromschaltelement dient beispielsweise zum Schalten des Antriebsstroms während des Arbeitsbetriebs. Der Statorstromschalter kann den Stator-Bremsstrom am Antriebsstromschalter vorbei führen, diesen sozusagen überbrücken.

Vorzugsweise ist bei der Hand-Werkzeugmaschine vorgesehen, dass sie einen in dem Rotor-Bremsstromkreis angeordneten Rotorstromschalter zum Kurzschließen der Rotorspulenanordnung, so dass der Rotor-Bremsstrom fließen kann, und/oder zur Einstellung des Rotor-Bremsstroms aufweist.

Der Rotorstromschalter ist vorzugsweise ein elektronischer Schalter, insbesondere ein Triac oder ein Feldeffekt-Transistor.

Jedenfalls ist es bevorzugt, dass der Rotor-Bremsstrom ohne einen elektrischen Umschalter, insbesondere ohne einen mechanisch umschaltenden elektrischen Umschalter, durch den Rotorstromschalter schaltbar ist.

Insgesamt ist es jedenfalls ein Vorteil, dass mit dem erfindungsgemäßen Konzept auch eine vollständig ohne elektronische oder mechanische Umschalter auskommende elektrische Schaltung bereitgestellt werden kann.

Mithin ist es jedenfalls ein Vorteil, wenn ein Bremsbetrieb, bei dem der Stator-Bremsstrom und der Rotor-Bremsstrom fließen, nämlich im Sinne eines Abbremsens des Rotors wirken, nur von dem Statorstromschalter oder den Statorstromschalter und dem Rotorstromschalter einstellbar ist. Selbstverständlich ist es denkbar, dass dann zumindest noch der Antriebsstromschalter, zum Beispiel ein Triac mitwirkt, indem er den für den Arbeitsbetrieb des Motors üblichen Motorstrom sozusagen blockiert oder abschaltet. Dann übernehmen die beiden anderen genannten Schalter, nämlich der mindestens eine Statorstromschalter und der Rotorstromschalter den Bremsbetrieb und lassen in geeignetem Umfang den Stator Bremsstrom und den Rotor-Bremsstrom fließen. Besonders bevorzugt ist es bei dieser Konfiguration, wenn kein Umschalter zum Umschalten einer elektrischen Verbindung von der Rotorspulenanordnung zu der Stromquelle auf die mindestens eine Statorspule vorhanden ist, um den Bremsstromkreis, durch den der Stator-Bremsstrom fließt, zu schließen oder herzustellen.

Der Statorstromschalter ist zweckmäßigerweise mit dem Rotorstromschalter gekoppelt derart, dass bei einem Schalten des Statorstromschalters der Rotorstromschalter gleichzeitig oder als Reaktion auf das Schalten des Statorstromschalters betätigbar ist oder betätigt wird. Es ist aber auch die umgekehrte Anordnung möglich, dass nämlich bei einem Schalten des Rotorstromschalters der Statorstromschalter gleichzeitig oder als Reaktion auf das Schalten des Rotorstromschalters betätigt wird. Es ist also nur eine einzige Betätigung oder Bedienungshandlung nötig, das heißt dass beispielsweise eine Steuereinrichtung zunächst den Statorstromschalter ansteuert, so dass dieser in den Bremsbetrieb umschaltet und gleichzeitig dadurch auch der Rotorstromschalter geschaltet wird. Beispielsweise wird eine Zündspannung an einen Eingang eines Triacs, das den Statorstromschalter oder den Rotorstromschalter bildet, dadurch erzeugt, dass im jeweils anderen Stromkreis, dem Rotorstromkreis oder dem Statorstromkreis, ein Strom fließt beziehungsweise eine Spannung anliegt.

Eine bevorzugte Ausführungsform sieht vor, dass der Rotorstromschalter und/oder der Statorstromschalter zu einer Phasenanschnittsteuerung ausgestaltete Schalter oder Schalteranordnungen umfassen, beispielsweise Triacs. Aber auch Leistungselektronik anderer Art, beispielsweise Feldeffekt-Transistoren oder dergleichen, sind ohne weiteres möglich.

Eine weiter bevorzugte Ausführungsform sieht vor, dass die Hand-Werkzeugmaschine eine Steuereinrichtung zur Ansteuerung der Bremsstromschalteranordnung und oder der Statorstromschalters aufweist. Die Steuereinrichtung steuert mindestens eine oder alle Funktionen der Hand-Werkzeugmaschine. Wenn die Steuereinrichtung beispielsweise erkennt, dass der Arbeitsbetrieb endet, z.B. weil ein Bediener einen Antriebsstromschalter loslässt, schaltet sie automatisch in den Bremsbetrieb um, wobei sie beispielsweise zunächst den Statorstromschalter zum Schalten des Stator-Bremsstroms und anschließend den Rotorstromschalter zum Schalten des Rotor-Bremsstroms ansteuert. Es ist aber auch die vorgenannte sequenzielle Beschaltung möglich, d.h. dass die Steuereinrichtung beispielsweise nur einen der vorgenannten Stromschalter ansteuert, der dann in Folge den anderen Stromschalter ansteuert.

Zweckmäßigerweise ist vorgesehen, dass die Hand-Werkzeugmaschine eine Strommesseinrichtung zur Erfassung des Stator-Bremsstroms aufweist. Die Stromeseinrichtung umfasst beispielsweise einen Widerstand oder sogenannten Shunt. Die Stromeseinrichtung ist vorzugsweise so in der Beschaltung des Reihenschlussmotors angeordnet, dass sie sowohl zur Messung eines während des Arbeitsbetriebs des Reihenschlussmotors fließenden Stator-Antriebsstroms geeignet ist, als auch zur Messung des Stator-Bremsstroms während der Bremsphase.

Die erfindungsgemäße Hand-Werkzeugmaschine zeichnet sich dadurch aus, dass sie im Bereich der Rotorspulenanordnung vorzugsweise keine Permanentmagnete oder Zusatzwicklungen hat, die zum Bremsen des Reihenschlussmotors notwendig sind. An dieser Stelle sei aber bemerkt, dass eine Ausführungsform vorsehen kann, das zusätzlich zur erfindungsgemäßen Ausgestaltung mit dem Bremsen anhand des Stator-Bremsstroms auch die Bremswirkung erhöhende derartige Permanentmagnete und/oder Zusatzwicklungen an der Rotorspulenanordnung vorgesehen sein können.

Nachfolgend werden Ausführungsbeispiele der Erfindung anhand der Zeichnung erläutert. Es zeigen:
- Figur 1: eine perspektivische Schrägansicht einer erfindungsgemäßen Hand-Werkzeugmaschine,
- Figur 2: einen erste Schaltungsanordnung und
- Figur 3: eine zweite Schaltungsanordnung der Hand-Werkzeugmaschine gemäß Figur 1 mit einer elektrischen Bremseinrichtung.

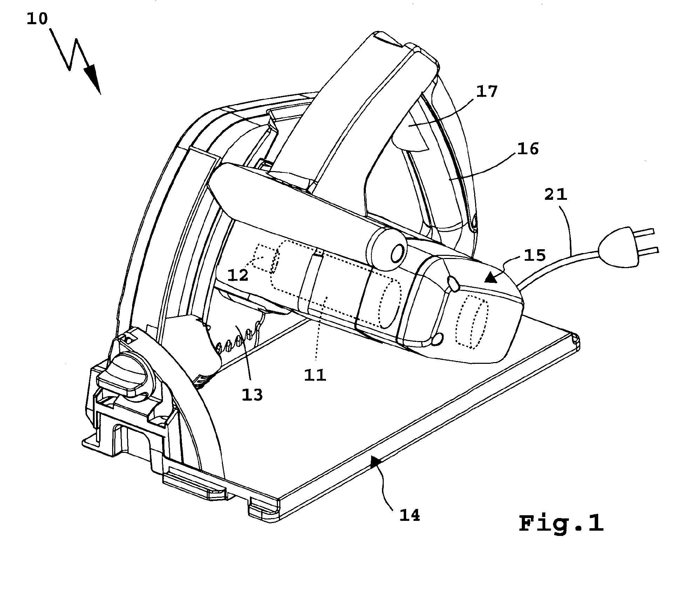

Bei der in Figur 1 dargestellten Hand-Werkzeugmaschine 10 handelt es sich beispielsweise um eine Säge, insbesondere eine Kreissäge, die eine durch einen Reihenschlussmotor 11 antreibbare Werkzeugaufnahme 12 aufweist. An der Werkzeugaufnahme 12, die beispielsweise direkt vom Reihenschlussmotor 11 oder über ein Getriebe angetrieben wird, ist ein Werkzeug 13, beispielsweise ein Sägeblatt angeordnet.

Selbstverständlich ist diese Ausführungsform nur exemplarisch zu verstehen. Eine erfindungsgemäße Hand-Werkzeugmaschine kann selbstverständlich eine andere Maschine sein, beispielsweise eine Stichsäge, eine Heckenschere oder ein sonstiges Hand-Werkzeug, bei dem es zweckmäßig ist, wenn das Werkzeug nach dem Ausschalten des Antriebsmotors oder Reihenschlussmotors möglichst schnell zum Stillstand gebracht wird, beispielsweise um Verletzungen des Nutzers oder Beschädigungen des Werkstückes zu vermeiden.

Die Hand-Werkzeugmaschine 10 umfasst beispielsweise einen Sägetisch, der eine Führungseinrichtung 14 bildet. An der Führungseinrichtung 14 ist eine den Reihenschlussmotor 11 enthaltende Antriebseinheit 15 schwenkbar gelagert. Die Antriebseinheit 15 weist beispielsweise einen Handgriff 16 auf, der von einem Bediener ergriffen oder umgriffen werden kann. An dem Handgriff 16 oder einer sonstigen Stelle der Hand-Werkzeugmaschine 10 ist ein Betätigungselement 17 zum Einschalten, Ausschalten und zweckmäßigerweise auch zur Einstellung einer Drehzahl des Reihenschlussmotors 11 zweckmäßigerweise ergonomisch günstig angeordnet.

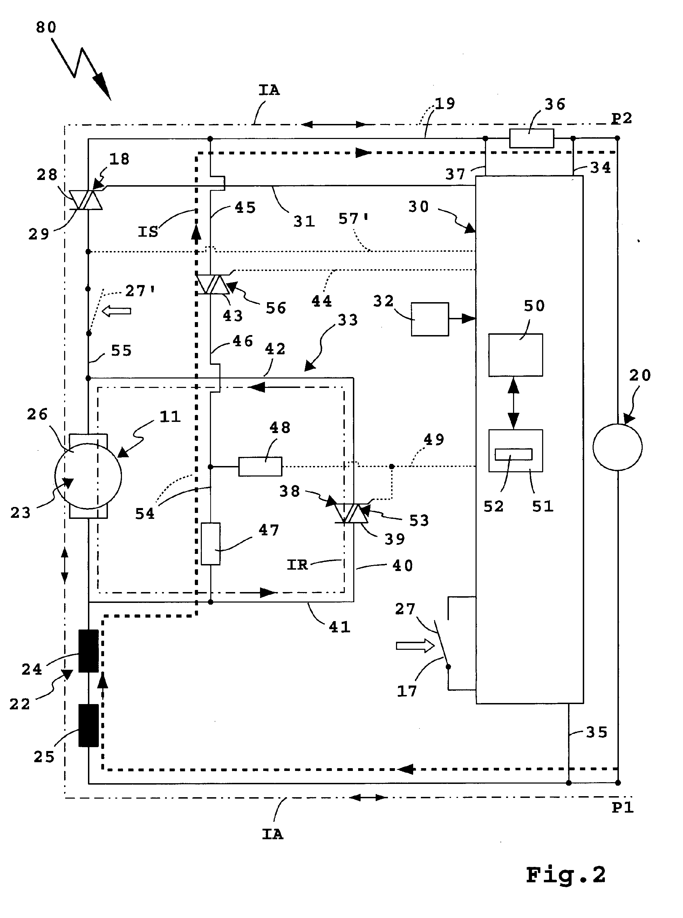

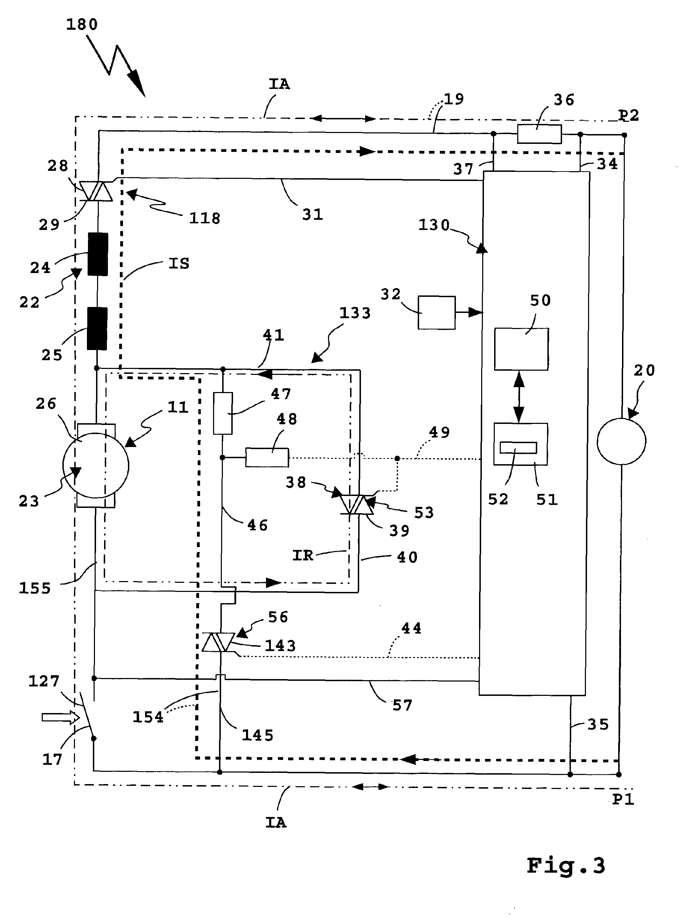

Zwei alternative elektrische Schaltungen 80, 180 der Hand-Werkzeugmaschine 10 sind in den Figuren 2 und 3 dargestellt. Dabei sind bei Komponenten gleicher oder ähnlicher Funktion dieselben Bezeichner und Bezugsziffern verwendet. Zur Verdeutlichung von Unterschieden sind teilweise bei der Schaltung 180 Bezugsziffern verwendet, die gegenüber der Schaltung 80 um 100 größer sind.

Durch Drücken des Betätigungselements 17 schließt eine Antriebsstromschalteranordnung 18, 118 einen Antriebsstromkreis 19, der von einer Stromquelle 20 über den Reihenschlussmotor 11 führt. Die Stromquelle 20 umfasst beispielsweise einen Akkumulator oder eine Batterie. Die Hand-Werkzeugmaschine 10 ist jedoch vorliegend eine leitungsgebundene Maschine bzw. eine für einen Netzbetrieb ausgelegte Hand-Werkzeugmaschine und weist ein Anschlusskabel 21 zum Anschluss an ein elektrisches Stromversorgungsnetz auf.

Von der Stromquelle 20 sind Anschlusspole P1 und P2, beispielsweise ein Masseanschluss und ein gegenüber Masse erhöhtes Potenzial bzw. Pole zur Bereitstellung einer Wechselspannung, dargestellt.

Alternativ ist ein Betrieb der Hand-Werkzeugmaschine 10 bzw. des Reihenschlussmotors 11 mit Gleichstrom möglich.

Der Antriebsstromkreis 19 führt über eine Statorspulenanordnung 22 sowie eine Rotorspulenanordnung 23 eines Rotors 26 des Reihenschlussmotors 11. Der Antriebsstromkreis 19 führt vom Anschlusspol P2 über eine Statorspule 24 und eine Statorspule 25 zum Anschlusspol P1.

Am Strompfad zwischen dem Anschlusspol P1 und Rotorspulenanordnung 23 befindet sich eine Stelleinrichtung 28 zur Einstellung des über den Antriebsstromkreis 19 fließenden Antriebsstroms IA, beispielsweise um die Leistung des Reihenschlussmotors 11 zu steuern oder zu regeln. Die Stelleinrichtung 28 umfasst beispielsweise einen Triac 29. Die Stelleinrichtung 28 ist von einer Steuereinrichtung 30, 130 über eine Steuerleitung 31 ansteuerbar.

Bei der Schaltung 80 ist die Statorspulenanordnung 22 zwischen der Rotorspulenanordnung 23 und dem Anschlusspol P1 angeordnet.

Bei der Schaltung 180 ist die Statorspulenanordnung 22 zwischen der Rotorspulenanordnung 23 und der Stelleinrichtung 28 angeordnet.

Zum Einschalten des Antriebsstroms IA sind bei den Schaltungen 80, 180 Antriebsstromschaltelemente 27, 127 zu betätigen, z.B. elektrische Kontaktschalter.

Der Antriebsstrom IA ist z.B. ein Wechselstrom, was durch Doppelpfeile angedeutet ist.

Das Antriebsstromschaltelement 27 ist z.B. an Steuereingänge der Steuereinrichtung 30 angeschlossen. Wenn das Antriebsstromschaltelement 27 geschlossen ist, steuert die Steuereinrichtung 30 die Stelleinrichtung 28 zur Einstellung des über den Antriebsstromkreis 19 fließenden Antriebsstroms IA an, z.B. entsprechend eines mittels des Antriebsstromschaltelements 27 oder eines separaten Einstellelements 32 einstellbaren oder fest vorgegebenen Parameters. Der Parameter kann z.B. eine Soll-Leistung und/oder Soll-Drehzahl des Reihenschlussmotors 11 betreffen.

Das Antriebsstromschaltelement 127 ist direkt im Antriebsstromkreis 19 angeordnet, z.B. zwischen der Rotorspulenanordnung 23 und dem Anschlusspol P1. Mit dem Antriebsstromschaltelement 127 kann also der Antriebsstromkreis 19 unabhängig von der Steuereinrichtung 130 oder der Stelleinrichtung 28 geschlossen oder geöffnet werden, so dass der Reihenschlussmotor 11 läuft oder nicht bestromt wird. Die Steuereinrichtung 130 steuert z.B. die Stelleinrichtung 28 davon zur Einstellung des über den Antriebsstromkreis 19 fließenden Antriebsstroms IA an, z.B. wie oben erläutert entsprechend eines mittels des separaten Einstellelements 32 einstellbaren oder fest vorgegebenen Parameters.

Auch bei der in Figur 2 dargestellten Schaltung könnte selbstverständlich ein direkt im Antriebsstromkreis 19 angeordnetes Antriebsstromschaltelement vorgesehen sein. Beispielhaft ist ein Antriebsstromschaltelement 27' eingezeichnet, das anstelle oder in Ergänzung zum Antriebsstromschaltelement 27 vorgesehen sein kann.

Die Antriebsstromschaltelemente 27, 127 können über das Betätigungselement 17 betätigt werden, was durch Pfeile angedeutet ist. Dann oder dadurch wird der Antriebsstromkreis 19 geschlossen. Der Antriebsstroms IA kann dann z.B. in der durch die Stelleinrichtung 28 einstellbaren Höhe fließen. An dieser Stelle sei bemerkt, dass die Stelleinrichtung 28 zumindest bei der Schaltung 180 eine zweckmäßige Option darstellt, also nicht unbedingt nötig ist und bei der Schaltung 80 auch durch ein anderes Stellelement, z.B. einen Leistungstransistor, einen MosFet etc., ergänzbar oder ersetzbar ist.

Wenn der Bediener das Betätigungselement 17 loslässt, wird der Antriebsstromkreis 19 geöffnet oder unterbrochen, d.h. der Reihenschlussmotor 11 elektrisch abgeschaltet. Die Steuereinrichtung 30 erkennt beispielsweise über elektrischer Schaltkontakte, an die das Antriebsstromschaltelement 27 angeschlossen ist, ob das Antriebsstromschaltelement 27 geschlossen oder geöffnet ist. Dementsprechend steuert die Steuereinrichtung 30, 130 die Stelleinrichtung 28 z.B. entsprechend zum Öffnen oder Schließen des Antriebsstromkreises 19 an.

Das Antriebsstromschaltelement 27 kann beispielsweise einen Tastschalter umfassen. Die Steuereinrichtung 30 kann z.B. den Antriebsstromkreis 19 solange geschlossen halten, wie das Antriebsstromschaltelement 27 gedrückt ist. Es ist aber auch ein anderer Modus möglich:

Die Steuereinrichtung 30 hält beispielsweise nach einem ersten Drücken des Antriebsstromschaltelements 27 den Antriebsstromkreises 19 geschlossen und öffnet diesen erst wieder, wenn das Antriebsstromschaltelement 27 vom Bediener ein weiteres Mal gedrückt wird. Somit kann also beispielsweise durch abwechselndes Betätigen des Antriebsstromschaltelements 27 die Steuereinrichtung 30 dazu angesteuert werden, den Antriebsstromkreis 19 zu öffnen oder zu schließen.

Die Steuereinrichtung 30, 130 erkennt das Öffnen der Antriebsstromschalteranordnung 18 und somit die Notwendigkeit, den Reihenschlussmotor 11 zu bremsen z.B. anhand einer Spannungsänderung, wenn die Antriebsstromschaltelemente 27 oder 127 geöffnet werden. Die Steuereinrichtung 30, 130 ist z.B. über Leitungen 34, 35 mit den Anschlusspolen P2 und P1 beziehungsweise der Versorgungsspannung verbunden, zweckmäßigerweise um auf dieses weise auch mit elektrischer Energie versorgt zu werden. Wenn das Antriebsstromschaltelement 127 öffnet, kann die Steuereinrichtung 30, 130 z.B. eine Spannungsänderung zwischen den Leitungen 34 und 35 erkennen.

Es ist auch möglich, dass die Steuereinrichtungen 30, 130 anhand eines Stromflusses über einen im Antriebsstromkreis 19 angeordneten Messwiderstand 36 erkennen, ob der Antriebsstromkreis 19 offen ist oder nicht. Der Shunt oder Messwiderstand 36 ist beispielsweise im Strompfad zwischen dem Anschlusspol P2 und der Stelleinrichtung 28 angeordnet. Die Steuereinrichtungen 30, 130 sind mit einer Leitung 37 an die Verbindung zwischen dem Messwiderstand 36 und der Stelleinrichtung 28 angekoppelt und können somit über die Leitungen 34 und 37 einen Spannungsabfall am Messwiderstand 36 und damit den Antriebsstrom IA erfassen.

Auch nach einem Öffnen des Antriebsstromkreises 19 bzw. wenn das Betätigungselement 17 eine Offenstellung einnimmt, liefe der Reihenschlussmotor 11 ohne besondere Maßnahmen an sich noch recht lange nach, was ein Verletzungsrisiko darstellt. Hier schafft eine Bremseinrichtung 33, 133 Abhilfe:

Die Bremseinrichtung 33, 133 umfasst eine Bremsstromschalteranordnung 38 mit einem Rotorstromschalter 39. Der Rotorstromschalter 39 umfasst beispielsweise ein Triac oder ein sonstiges Schaltelement, mit dem ein für einen Bremsbetrieb der Hand-Werkzeugmaschine 10 geeigneter Rotor-Bremsstromkreis 40 gebildet werden kann. Im Rotor-Bremsstromkreis 40 fließt ein Rotor-Bremsstrom IR. Der Rotor-Bremsstrom IR ist beispielsweise ein Kurzschlussstrom, der die Rotorspulenanordnung 23 durchfließt. Mit den Anschlüssen der Rotorspulenanordnung 23 ist der Rotorstromschalter 39 über Leitung 41 und 42 elektrisch verbunden. Die Leitung 41 ist beispielsweise zwischen die Statorspulenanordnung 22 und die Rotorspulenanordnung 23 geschaltet, während die andere Leitung 42 ausgangsseitig an die Rotorspulenanordnung 23 angeschlossen ist. Mithin kann also der Rotor-Bremsstrom IR ungebremst bzw. als Kurzschluss durch die Rotorspulenanordnung 23 fließen.

An dieser Stelle sei allerdings bemerkt, dass über eine geeignete Phasenanschnittsteuerung der Bremsstromschalteranordnung 38, beispielsweise des Rotorstromschalters 39, auch eine Reduzierung bzw. Einstellung des Rotor-Bremsstroms IR möglich ist. In den Rotor-Bremsstromkreis 40 könnte selbstverständlich auch einen Widerstand oder ein sonstiges strombegrenzendes Element, zum Beispiel auch eine Spule oder eine Induktivität, geschaltet sein.

Die Steuereinrichtung 30, 130 kann den Rotorstromschalter 39 über eine Steuerleitung 49 direkt ansteuern, beispielsweise um die Höhe des Rotor-Bremsstroms IR zu beeinflussen.

Vorliegend ist jedoch eine andere Lösung gewählt:

Die Steuereinrichtung 30, 130 steuert nämlich über eine Steuerleitung 44 einen Statorstromschalter 43, 143 dazu an, während des Bremsbetriebs des Reihenschlussmotors 11 einen Stator-Bremsstrom IS einzustellen. Der Statorstromschalter 43, 143 umfasst beispielsweise ebenfalls ein Triac oder eine sonstige leistungselektronische Komponente.

Selbstverständlich könnte der Statorstromschalter 43, 143 ebenso wie der Rotorstromschalter 39 auch als elektrischer Schaltkontakt bzw. Kontaktschalter ausgestaltet sein.

Der Statorstromschalter 43, 143 ist an eines der beiden Potenziale bzw. Anschlusspole P1 oder P2 angeschlossen. Die Konfiguration ist dabei so getroffen, dass ein Strompfad für den Stator-Bremsstrom IS am jeweils während des Bremsbetrieb den Antriebsstrom IA blockierenden Schaltelement der Antriebsstromschalteranordnung 18 vorbeiführt, das in einen Strompfad 55, 155 geschaltet ist.

Das den Antriebsstrom IA blockierende Schaltelement ist bei der Schaltung 80 die Stelleinrichtung 28, die von der Steuereinrichtung 30 beim Ausschalten des Reihenschlussmotors 11 zu einem Öffnen geschaltet wird bzw. hochohmig ist. Beispielsweise ist bei der Schaltung 80 der Statorstromschalter 43 mit seiner Leitung 45 mit dem Anschlusspol P2 elektrisch verbunden.

Bei der Schaltung 180 ist das beim Ausschalten des Reihenschlussmotors 11 den Antriebsstrom IA blockierende Element das Antriebsstromschaltelement 127, das dann eine Offenstellung einnimmt. Die Leitung 145 ist dementsprechend ebenso wie das Antriebsstromschaltelement 127 mit dem Anschlusspol P1 verbunden.

Der Statorstromschalter 43, 143 ist weiterhin über eine Leitung 46 und mit einem Widerstand 47 elektrisch verbunden, der im Sinne einer Strombegrenzung wirkt. Der Widerstand 47 ist also in Reihe mit dem Statorstromschalter 43, 143 geschaltet. Bei einem Ausfall des Statorstromschalters 43 oder 143 sorgt der Widerstand 47 beispielsweise dafür, dass der Stator-Bremsstrom IS nicht zu hoch wird. Der Widerstand 47 kann aber auch als Schutzwiderstand für den Statorstromschalter 43 oder 143 angesehen werden.

Der Widerstand 47 seinerseits wiederum ist mit der Leitung 41 verbunden, die zwischen die Rotorspulenanordnung 23 und die Erregerspulenanordnung oder Statorspulenanordnung 22 führt. Über den Widerstand 47 ist also der Statorstromschalter 43, 143 mit der Statorspulenanordnung 22 verbunden.

Somit kann also der Stator-Bremsstrom IS vom Anschlusspol P2 (bei der Schaltung 80) bzw. P1 bei der Schaltung 180 zum Statorstromschalter 43, 143 und weiter über den Widerstand 47 und die Leitung 41 zur Statorspulenanordnung 22 und von dort wiederum zum anderen Anschlusspol P1 bzw. P2 strömen. Die Stromrichtung des Stator-Bremsstroms IS ist durch einen Pfeil angedeutet, das heißt der Stator-Bremsstrom IS fließt in nur einer Stromrichtung gegensinnig zu dem Rotor-Bremsstrom IR, so dass die beiden Bremsströme IS und IR bei der Statorspulenanordnung 22 und der Rotorspulenanordnung 23 jeweils ein Magnetfeld im Sinne eines Abbremsens des Rotors 26 erzeugen.

Nach einem Ausschalten des Reihenschlussmotors 11 strömt der Rotor-Bremsstrom IR in der jeweiligen Stromrichtung weiter, in der er zum Zeitpunkt des Abschaltens des Reihenschlussmotors 11 schon strömte. Der Rotor-Bremsstrom IR wird zudem durch das Magnetfeld der Statorspulenanordnung 22 getrieben, nimmt jedoch ab, weil der Rotor 26 durch das Abbremsen immer langsamer dreht und der somit in die Rotorspulenanordnung 23 induzierte Rotor-Bremsstrom IR kleiner wird.

Mit anderen Worten bedeutet dies, dass der Rotor-Bremsstrom IR selbstverständlich auch in der nicht eingezeichneten Richtung durch den Rotor-Bremsstromkreis 40 strömen könnte und der Statorstromschalter 43, 143 ein Weiterfließen des Stator-Bremsstroms IS entgegensetzt zur eingezeichneten Stromrichtung steuert.

Es ist zweckmäßigerweise vorgesehen, dass der Stator-Bremsstrom IS ein unidirektional fließender, gegebenenfalls pulsierender Gleichstrom ist. Es strömt also beispielsweise nur jeweils eine positive oder eine negative Halbwelle des Stator-Bremsstroms IS. Die jeweilige Halbwelle muss auch nicht vollständig fließen, sondern kann durch eine Phasenanschnittsteuerung mittels des entsprechend geschalteten Statorstromschalters 43, 143 nur teilweise fließen.

Die beiden Statorstromschalter 43 und 143 wirken beispielsweise in der Art von Dioden.

Der beim Abbremsen kleiner werdende Rotor-Bremsstrom IR wird schließlich NULL, wenn der Reihenschlussmotor 11 steht.

Wenn der Reihenschlussmotor 11 steht bzw. still gesetzt ist, steht sorgt die Steuereinrichtung 30, 130 oder eine sonstige Ansteuerung zweckmäßigerweise dafür, dass Rotorstromschalter 39 und der Statorstromschalter 43, 143 stets geschlossen bleibt, so dass der Reihenschlussmotor 11 immer abgebremst ist.

Es ist aber auch möglich, dass die Ansteuerung dafür sorgt, dass der Rotorstromschalter 39 und der Statorstromschalter 43, 143, bei stehendem Reihenschlussmotor 11 geöffnet werden und bleiben, so dass der Reihenschlussmotor 11, wenn er vollständig außer Betrieb gesetzt ist, von der Versorgungsspannung, den Anschlusspolen P1 und P2, getrennt ist.

Zweckmäßigerweise ist bei der Schaltung 80 zwischen dem Anschluss der Leitung 45 und dem Anschlusspol P2 der Messwiderstand 36 angeordnet, um sowohl den Antriebsstrom IA auch den Stator-Bremsstrom IS messen zu können.

Auch bei der Schaltung 180 ist der Messwiderstand 36 dazu ausgelegt und geeignet, sowohl den Antriebsstrom IA als auch den Stator-Bremsstrom IS messen zu können. Der Messwiderstand 36 befindet sich unmittelbar vor dem Anschlusspol P2, also im Strompfad beider die Statorspulenanordnung 23 durchfließenden Ströme.

Es ist möglich, dass die Steuereinrichtung 30 oder 130 nacheinander oder gleichzeitig den Statorstromschalter 43, 143 und den Rotorstromschalter 39 schaltet. Es ist aber auch eine sequenzielle Beschattung möglich derart, dass die Steuereinrichtung 30, 130 beispielsweise nur den Statorstromschalter 43, 143 ansteuert und der Rotorstromschalter 39 sequenziell quasi hinzu geschaltet wird. Beispielsweise ist ein Schalteingang des Rotorstromschalters 39 über einen Widerstand 48 mit der Leitung 46, d.h. mit einem Ausgang des Statorstromschalters 43, 143 verbunden. Wenn der Statorstromschalter 43, 143 einschaltet, liegt über den Widerstand 48 am Schalteingang des Rotorstromschalters 39 eine Schalt- oder Zündspannung an, so dass auch dieser leitend wird.

Die Steuereinrichtung 30, 130 umfasst beispielsweise einen Mikroprozessor 50 sowie einen Speicher 51, in welchem ein Programm 52 gespeichert ist. Durch Ausführung des Programms 52, das durch den Mikroprozessor 50 ausführbare Befehle umfasst, kann die Steuereinrichtung 30, 130 die erfindungsgemäßen Ansteuerfunktionen leisten. Selbstverständlich wäre aber auch eine analoge Ansteuerung der erfindungsgemäßen Schaltelemente, beispielsweise des Statorstromschalters 43, 143 und/oder des Rotorstromschalters 39, z.B. mittels Widerständen, Transistoren etc., ohne weiteres möglich.

Es ist auch möglich, dass beispielsweise die Steuereinrichtung 130 oder 30 über eine Leitung 57 oder 57' mit dem einen Potenzial des Antriebsstromschaltelements 127 oder 27' verbunden ist und zudem an das andere Potenzial des Schalters 127 oder 27', beispielsweise P1, über die Leitung 35 angeschlossen ist, so dass die Steuereinrichtung 30, 130 über die Potenzialdifferenz zwischen diesen Anschlüssen die Stellung des Antriebsstromschaltelements 127 oder 27' erfassen kann.

Die Steuereinrichtung 130, 30 kann vorzugsweise die Stellung des Antriebsstromschaltelements 127 und/oder 27' potenzialfrei erfassen, beispielsweise anhand eines Optokopplers.

Die Antriebsstromschaltelemente 27 und/oder 127 und/oder 27' können beispielsweise Rastschalter oder Tastschalter sein. Ein Tastschalter ist so lange geschlossen, wie er beispielsweise gedrückt wird, während einer Rastschalter die jeweilige Stellung beibehält.

Auch zur Ansteuerung der insbesondere leistungselektronischen Schaltelemente, beispielsweise der Stelleinrichtung 28 und/oder des Rotorstromschalters 39 und/oder des Statorstromschalters 43, und/oder 143 ist vorteilhaft eine potenzialfreie Beschaltung vorgesehen. Beispielsweise steuert die Steuereinrichtung 30, 130 über die Steuerleitungen 44 und/oder 49 und/oder 31 die jeweiligen Triacs über Optokoppler an.

Die Steuereinrichtung 30, 130 kann selbstverständlich noch weitere Funktionen erfüllen, beispielsweise eine Temperatur-Überwachung des Reihenschlussmotors 11. Wenn dieser überhitzt, kann die Steuereinrichtung 30 oder 130 den Reihenschlussmotor 11 abschalten.

Bei der Schaltung 180 ist die Stelleinrichtung 28 in den Stator-Bremsstromkreis 154, der von den Anschlusspolen P1 und P2 über die Statorspulenanordnung 22 führt, geschaltet. Hier kann also beispielsweise die Stelleinrichtung 28 die Funktion beispielsweise einer Stromreduzierungseinrichtung oder Stromeinstelleinrichtung 56 leisten. Zweckmäßigerweise ist jedoch vorgesehen, dass im Stator-Bremsstromkreis 54 oder 154 der Statorstromschalter 43, 143 als eine Stromeinstelleinrichtung 56 dient, mit der die Höhe des Stator-Bremsstroms IS und somit auch die Bremswirkung des Reihenschlussmotors 11 einstellbar ist.

Im Rotor-Bremsstromkreis 40 kann der Rotorstromschalter 39 als eine Stromreduzierungseinrichtung 53 dienen. Mithin muss also der Rotor-Bremsstrom IR nicht unbedingt ein Kurzschlussstrom sein, sondern kann auch in seiner Höhe begrenzt werden.

## Patentansprüche

1. Hand-Werkzeugmaschine, insbesondere Säge, mit einer durch einen elektrischen Reihenschlussmotor (11) antreibbaren Werkzeugaufnahme (12) für ein Werkzeug (13), insbesondere ein Sägeblatt, wobei der Reihenschlussmotor (11) eine Rotorspulenanordnung (23) und eine Statorspulenanordnung (22) aufweist, die bei einem Arbeitsbetrieb des Reihenschlussmotors (11) von einem durch eine elektrische Antriebsstromschalteranordnung (18) schaltbaren, von einer Stromquelle (20) bereitgestellten Antriebsstrom (IA) durchflossen werden, wobei die Hand-Werkzeugmaschine (10) zum Abbremsen des Reihenschlussmotors (11) eine elektrische Bremseinrichtung (33; 133) aufweist, die eine Bremsstromschalteranordnung (38) zum Schalten eines Rotor-Bremsstromkreises (40) für einen Rotor-Bremsstrom (IR) umfasst, der die Rotorspulenanordnung (23) im Sinne eines Abbremsens durchfließt, **dadurch gekennzeichnet, dass** die Bremsstromschalteranordnung (38) den Rotor-Bremsstromkreis (40) durch Kurzschließen der Rotorspulenanordnung (23) bildet und mindestens eine Statorspule (24, 25) der Statorspulenanordnung (22) anhand eines Statorstromschalters (43; 143) der Bremsstromschalteranordnung (38) mit der Stromquelle (20) zu einem Stator-Bremsstromkreis (54; 154) verbunden ist, so dass ein die mindestens eine Statorspule (24, 25) durchfließender Stator-Bremsstrom (IS) durch die Stromquelle (20) bereitgestellt wird und die mindestens eine Statorspule (24, 25) anhand des Stator-Bremsstroms (IS) ein Magnetfeld zum Abbremsen des Rotors (26) erzeugt.

2. Hand-Werkzeugmaschine nach Anspruch 1, **dadurch gekennzeichnet, dass** in dem während des Abbremsens des Reihenschlussmotors (11) aktiven Stator-Bremsstromkreis (54; 154) mindestens eine Diodeneinrichtung geschaltet ist derart, dass der Stator-Bremsstrom (IS) nur in einer Stromrichtung durch die mindestens eine Statorspule (24, 25) strömt, wobei diese Stromrichtung gegensinnig zur Stromrichtung des Rotor-Bremsstroms (IR) ist.

3. Hand-Werkzeugmaschine nach Anspruch 1 oder 2, **dadurch gekennzeichnet, dass** die Diodeneinrichtung durch den Statorstromschalter (43; 143) gebildet ist oder eine Komponente des Statorstromschalters (43; 143) ist.

4. Hand-Werkzeugmaschine nach einem der vorhergehenden Ansprüche, **dadurch gekennzeichnet, dass** sie eine in den Stator-Bremsstromkreis (54; 154) schaltbare oder in dem Stator-Bremsstromkreis (54; 154) angeordnete Stromeinstelleinrichtung (56) zur Reduzierung oder Einstellung des Stator-Bremsstroms (IS) aufweist, wobei die Stromeinstelleinrichtung (56) zweckmäßigerweise durch den Statorstromschalter (43; 143) gebildet ist oder vorteilhaft der Statorstromschalter (43; 143) eine Komponente der Stromeinstelleinrichtung (56) ist.

5. Hand-Werkzeugmaschine nach einem der vorhergehenden Ansprüche, **dadurch gekennzeichnet, dass** sie einen in dem Rotor-Bremsstromkreis (40) angeordneten Rotorstromschalter (39) zum Kurzschließen der Rotorspulenanordnung (23), so dass der Rotor-Bremsstrom (IR) fließen kann, und/oder zur Einstellung des Rotor-Bremsstroms (IR) aufweist.

6. Hand-Werkzeugmaschine nach Anspruch 5, **dadurch gekennzeichnet, dass** der Statorstromschalter (43; 143) mit dem Rotorstromschalter (39) gekoppelt ist, derart, dass bei einem Schalten des Statorstromschalters (43; 143) der Rotorstromschalter (39) gleichzeitig oder als Reaktion auf das Schalten des Statorstromschalters (43; 143) betätigbar oder umgekehrt, dass bei einem Schalten des Rotorstromschalters (39) der Statorstromschalter (43; 143) gleichzeitig oder als Reaktion auf das Schalten des Rotorstromschalters (39) betätigt wird.

7. Hand-Werkzeugmaschine nach Anspruch 5 oder 6, **dadurch gekennzeichnet, dass** der Rotorstromschalter (39) und/oder der Statorstromschalter (43; 143) zu einer Phasenanschnittsteuerung ausgestaltete Schalter oder Schalteranordnungen, insbesondere ein Triac, umfassen und/oder dass der Rotorstromschalter (39) zum Schalten des Rotor-Bremsstroms (IR) keinen, insbesondere mechanische Schaltkontakte umfassenden, elektrischen Umschalter zum Trennen der Rotorspulenanordnung (23) von der Stromquelle (20) umfasst.

8. Hand-Werkzeugmaschine nach einem der vorhergehenden Ansprüche, **dadurch gekennzeichnet, dass** ein Bremsbetrieb, bei dem der Stator-Bremsstrom (IS) und der Rotor-Bremsstrom (IR) fließen, insbesondere ausschließlich der Statorstromschalter (43', 143) und der Rotorstromschalter (39) und insbesondere kein Umschalter zum Umschalten einer elektrischen Verbindung von der Rotorspulenanordnung (23) zu der Stromquelle (20) auf die mindestens eine Statorspule (24, 25) zur Bildung eines von dem Stator-Bremsstrom (IS) durchflossenen Bremsstromkreises erforderlich sind.

9. Hand-Werkzeugmaschine nach einem der vorhergehenden Ansprüche, **dadurch gekennzeichnet, dass** der Statorstromschalter (43', 143) ein von einem Antriebstromschaltelement (27, 28) der Antriebstromschalteranordnung (18) separater Schalter ist.

10. Hand-Werkzeugmaschine nach einem der vorhergehenden Ansprüche, **dadurch gekennzeichnet, dass** sie eine in den Rotor-Bremsstromkreis (40) schaltbare oder in dem Rotor-Bremsstromkreis (40) angeordnete Stromreduzierungseinrichtung (53) zur Reduzierung oder Einstellung des Rotor-Bremsstroms (IR) aufweist, wobei die Stromreduzierungseinrichtung (53) zweckmäßigerweise durch den Rotorstromschalter (39) der Bremsstromschalteranordnung (38) gebildet ist oder der Rotorstromschalter (39) vorteilhaft eine Komponente der Stromeinstelleinrichtung (56) ist.

11. Hand-Werkzeugmaschine nach einem der vorhergehenden Ansprüche, **dadurch gekennzeichnet, dass** der Statorstromschalter (43; 143) parallel zu einem die Rotorspulenanordnung (23) sowie ein Antriebsstromschaltelement (27, 28) der Antriebsstromschalteranordnung (18) zum Schalten des Antriebsstroms (IA) umfassenden Strompfad (55; 155) mit der Statorspulenanordnung (22) verbunden ist.

12. Hand-Werkzeugmaschine nach einem der vorhergehenden Ansprüche, **dadurch gekennzeichnet, dass** in dem Stator-Bremsstromkreis (54; 154) mindestens ein Widerstand (47) und/oder eine Diode zur Strombegrenzung, insbesondere bei einem Ausfall des Statorstromschalters, vorgesehen ist.

13. Hand-Werkzeugmaschine nach einem der vorhergehenden Ansprüche, **dadurch gekennzeichnet, dass** sie eine Steuereinrichtung (30; 130) zur Ansteuerung der Bremsstromschalteranordnung (38) und/oder des Statorstromschalters (43; 143) und/oder des Rotorstromschalters (39) aufweist.

14. Hand-Werkzeugmaschine nach einem der vorhergehenden Ansprüche, **dadurch gekennzeichnet, dass** sie eine Strommesseinrichtung zur Erfassung des Stator-Bremsstroms (IS), insbesondere umfassend einen Shunt (36), aufweist, wobei die Strohmesseinrichtung vorzugsweise so in der Beschaltung des Reihenschlussmotors (11) angeordnet ist, dass sie auch zur Messung eines während des Arbeitsbetriebs des Reihenschlussmotors (11) fließenden Stator-Antriebsstroms (IA) geeignet ist.

15. Hand-Werkzeugmaschine nach einem der vorhergehenden Ansprüche, **dadurch gekennzeichnet, dass** die Rotorspulenanordnung (23) keine Permanentmagnete oder Zusatzwicklungen aufweist, die zum Bremsen des Reihenschlussmotors (11) notwendig sind und/oder dass die Bremsstromschalteranordnung ausschließlich elektronische Schalter, die zwischen einer Sperrstellung und einer Durchlassstellung schaltbar sind, umfasst und/oder dass die Bremsstromschalteranordnung keinen Umschalter umfasst.
